# EUROPEAN PATENT APPLICATION

(11) **EP 2 703 226 A1**
(43) Date of publication of application: **05.03.2014**
(21) Application number: 12777628.4
(22) Date of filing: 27.04.2012
(51) Int. Cl.: B60R 16/02, B60H 1/00

(54) **VEHICLE-MOUNTED APPARATUS CONTROL DEVICE AND PROGRAM**

(30) Priority: 28.04.2011 JP 2011101574
(71) Applicant: ADC Technology Inc., Nagoya-shi, Aichi 460-0003 (JP)
(72) Inventor: KURODA, Tatsumi, Nagoya-shi Aichi 460-0003 (JP); USAMI, Osamu, Nagoya-shi Aichi 460-0003 (JP)
(74) Representative: Patentanwälte Olbricht Buchhold Keulertz
(86) International application number: PCT/JP2012/061432
(87) International publication number: WO 2012/147942

(57) **Abstract**

A vehicle-mounted control device is provided with a touch detection unit and a control unit. The touch detection unit is provided corresponding to a vehicle-mounted apparatus to be controlled, and can detect a touch operation that is of a user and that relates to a function of the vehicle-mounted apparatus to be controlled. The control unit controls the vehicle-mounted apparatus on the basis of the touch operation of the user detected by the touch detection unit.

## Description

### CROSS-REFERENCE TO RELATED APPLICATIONS

This international application claims the benefit of Japanese Patent Application No. 2011-101574 filed April 28, 2011 in the Japan Patent Office, and the entire disclosure of Japanese Patent Application No. 2011-101574 is incorporated herein by reference.

### TECHNICAL FIELD

The present invention relates to a vehicle-mounted apparatus control device that controls a vehicle-mounted apparatus to be mounted in a vehicle.

### BACKGROUND ART

Conventionally, touch panels have been employed to facilitate a selecting operation of menu items or the like, thereby providing an enhanced usability of an apparatus. It has been proposed to install such touch panels into a vehicle.

For example, Patent Document 1 below discloses a touch panel provided inside a fixed window, through which information is input. In accordance with the input information, a control instruction signal is transmitted to device control equipment.

Furthermore, for example, Patent Document 2 below discloses a touch panel provided in a windshield, through which the position of an oncoming vehicle viewed forward is input. Thereby, a turnout for enabling passing by the oncoming vehicle is estimated and indicated.

Moreover, for example, Patent Document 3 below discloses a touch panel provided in a windshield. A head-up display device is employed to image a push button display. The touch panel is provided to correspond to the push button display.

### PRIOR ART DOCUMENTS

### PATENT DOCUMENTS

Patent Document 1: Japanese Unexamined Patent Application Publication No. 2004-169435
Patent Document 2: Japanese Unexamined Patent Application Publication No. 8-16986
Patent Document 3: Japanese Unexamined Patent Application Publication No. 7-307775

### SUMMARY OF THE INVENTION

### PROBLEMS TO BE SOLVED BY THE INVENTION

An important point for design of a human interface is to enable more intuitive operations. In this regard, a touch panel can be employed to intuitively choose displayed menu items or the like.

In the techniques disclosed in Patent Documents 1 to 3 mentioned above, however, the touch panel is arranged in the window without reference to an apparatus to operate, which is inadequate from the viewpoint of intuitive operations of the vehicle-mounted apparatus or the like.

It is desirable that one aspect of the present invention be to provide a vehicle-mounted apparatus control device that enables more intuitive operations.

### MEANS FOR SOLVING THE PROBLEMS

A vehicle-mounted apparatus control device according to the present invention includes a touch detection unit and a control unit.

The touch detection unit is a unit for detecting a touch operation of a user, and on the basis of the touch operation, the control unit controls a vehicle-mounted apparatus.

In particular, in the present invention, the touch detection unit is provided corresponding to a vehicle-mounted apparatus to be controlled, and can detect a touch operation relating to a function of the vehicle-mounted apparatus to be controlled. Although described later in detail, when the vehicle-mounted apparatus to be controlled is, for example, a windshield wiper device, the touch detection unit may detect a touch operation on a windshield to which water droplets to be wiped by a wiper adhere.

This enables more intuitive operations, thereby offering a dramatic improvement in the operability of the vehicle-mounted apparatus.

Note that the touch detection unit may be realized as, for example, a touch panel. It is sufficient that the touch detection unit can detect a touch operation on a corresponding area. The touch detection unit may be realized as a camera, a temperature sensor, or the like disposed to image the corresponding area.

The control unit may control the vehicle-mounted apparatus in a case where, on the basis of the touch operation detected by the touch detection unit, it is determined that the vehicle-mounted apparatus needs to be controlled. In this case, even though the touch operation is performed, the vehicle-mounted apparatus is not controlled if there is no need to do so. This enables more suitable operations of the vehicle-mounted apparatus.

Specifically, the vehicle-mounted apparatus control device may include a water-droplet presence determination unit that determines whether or not water droplets are present on an outer surface of a window. In this case, if the vehicle-mounted apparatus includes a wiper device and the touch detection unit is provided so that a touch operation on an inner surface of the window can be detected, the control unit may control the wiper device in a case where a touch operation is detected by the touch detection unit and by the water-droplet presence determination unit, it is determined that water droplets are present on the outer surface of the window. For example, in a case where it begins to rain, the wiper may be activated by touching a position where raindrops adhere from the inner surface of the window. This enables more intuitive and suitable operations of the vehicle-mounted apparatus.

Note that either of detection of the touch operation and determination of the presence of water droplets may be performed first. To be more specific, the wiper device may be controlled so that a touch operation is utilized as a trigger and then the presence of water droplets is determined. Or with the presence of water droplets being continuously determined, the wiper device may be controlled if a touch operation is additionally performed.

Moreover, the control unit may control the vehicle-mounted apparatus when a touch operation in a predetermined way is detected by the touch detection unit. The touch operation in a predetermined way includes: "tapping" which represents a touch on the touch detection unit in a tapping manner; "double tapping" which represents consecutive tapping operations; "swiping" which represents a touch on the touch detection unit by rubbing; "flicking" which represents a touch on the touch detection unit by flipping in a predetermined direction; and the like. To inhibit false detection, a touch operation by two fingers, three fingers, or four fingers may be adopted. This enables more suitable operations of the vehicle-mounted apparatus.

Specifically, in a case where the vehicle-mounted apparatus includes a turning signal device, and the touch detection unit is provided so that a touch operation on a steering wheel can be detected, the control unit may control the turning signal device when a touch operation in a predetermined way is detected by the touch detection unit. For example, in a case where the touch detection units are disposed in right and left sides of a steering wheel, respectively, the turning signal may be activated by double tapping the right or left side of the steering wheel. This enables more intuitive and suitable operations of the vehicle-mounted apparatus.

Further specifically, in a case where the vehicle-mounted apparatus includes an audio device, and the touch detection unit is provided so that a touch operation on an area that corresponds to a speaker constituting the audio device can be detected, the control unit may control the audio device when a touch operation in a predetermined way is detected by the touch detection unit. For example, in a case where the touch panel is disposed in a vicinity of the speaker installed in a pillar or the like, the audio device may be activated by double tapping the panel of the pillar. This enables more intuitive and suitable operations of the vehicle-mounted apparatus.

Still further specifically, in a case where the vehicle-mounted apparatus includes an air conditioning device, and the touch detection unit is provided so that a touch operation on an area corresponding to an air outlet of the air conditioning device can be detected, the control unit may control the air conditioning device when a touch operation in a predetermined way is detected by the touch detection unit. For example, in a case where the touch panel is disposed in a vicinity of the air outlet, the air conditioning device may be activated by double tapping the panel in the vicinity of the air outlet. This enables more intuitive and suitable operations of the vehicle-mounted apparatus.

Also, the control unit may determine a direction that is indicated by the touch operation detected by the touch detection unit, and control the vehicle-mounted apparatus in accordance with the direction. By the touch operation such as swiping and flicking described above, the direction of the touch operation can be obtained. This can change control of the vehicle-mounted apparatus in accordance with the direction that is indicated by the touch operation, thereby enabling more intuitive operations.

Specifically, in a case where the vehicle-mounted apparatus includes a gearshift device, and the touch detection unit is provided so that a touch operation on an area that corresponds to a shift position indicator indicating a shift position can be detected, the control unit may change the shift position in accordance with the direction that is indicated by the touch operation detected by the touch detection unit. For example, in a case where the touch panel is disposed on a surface of the shift position indicator, the gearshift device may be activated by swiping a panel of the shift position indicator. This enables more intuitive and suitable operations of the vehicle-mounted apparatus.

Further specifically, in a case where the vehicle-mounted apparatus includes an audio device, and the touch detection unit is provided so that a touch operation on an area that corresponds to a speaker constituting the audio device can be detected, the control unit may control the audio device in accordance with the direction that is indicated by the touch operation detected by the touch detection unit. For example, in a case where the touch panel is disposed in a vicinity of the speaker installed in a pillar or the like, a volume of the audio device may be adjusted by swiping the pillar panel. This enables more intuitive and suitable operations of the vehicle-mounted apparatus.

Still further specifically, in a case where the vehicle-mounted apparatus includes an air conditioning device, and the touch detection unit is provided so that a touch operation on an area which corresponds to an air outlet of the air conditioning device can be detected, the control unit may control the air conditioning device in accordance with the direction that is indicated by the touch operation detected by the touch detection unit. For example, in a case where the touch panel is disposed in a vicinity of the air outlet, the set ambient temperature of the air conditioning device may be adjusted by swiping the panel in a vicinity of the air outlet. This enables more intuitive and suitable operations of the vehicle-mounted apparatus.

In addition, if a voice input unit that inputs voice of the user is provided, the control unit may control the vehicle-mounted apparatus when a voice input through the voice input unit is applied in conjunction with the touch operation detected by the touch detection unit. Such detection of both of a touch operation and a voice input operation can decrease false detection.

The above description has been made of the present invention as a vehicle-mounted apparatus control device. However, the present invention can also be realized as a program that performs the functions of the control unit included in the vehicle-mounted apparatus control device.

This program may be stored in a ROM or a backup RAM incorporated in a computer, and used by loading from the ROM or the backup RAM into the computer. Alternatively, the program may be used by loading through a network into the computer.

Moreover, this program may be used in the state of being recorded on a computer readable recording medium. The recording medium includes, for example, a flexible disk (FD), an optical disc (MO), a DVD, a CD-ROM, a Blu-Ray disc, an HD-DVD, a hard disk, a portable semiconductor memory (for example, a USB memory, a memory card, and the like).

### BRIEF DESCRIPTION OF THE DRAWINGS

FIG. 1 is a block diagram showing a structure of a vehicle-mounted apparatus control device according to an embodiment.
FIG. 2 is a schematic diagram showing placement of touch panels and others in a vehicle interior.
FIG. 3 is a flow chart showing a wiper control process.
FIG. 4 is a flow chart showing a turning signal control process.
FIG. 5 is a flow chart showing a gearshift control process.
FIG. 6 is a flow chart showing an audio control process.
FIG. 7 is a flow chart showing an air conditioner control process.
FIG. 8 is a schematic diagram showing an exemplary display situation of a shift position indicator.

### EXPLANATION OF REFERENCE NUMERALS

1 ... vehicle-mounted apparatus control device, 10...control unit, 11...CPU, 12...ROM, 20...wiper touch panel, 21... wiper device, 30...raindrop sensor, 40(40a, 40b)...turning signal touch panel, 41...turning signal device, 50... gearshift touch panel, 51... gearshift device, 60 ... audio device touch panel, 61...audio device, 61a...speaker, 70...air-conditioner touch panel, 71... air conditioning device, 81... steering wheel, 82... shift position indicator, 83... dashboard, 84... air outlet, 90... voice input device

### MODE FOR CARRYING OUT THE INVENTION

Hereinafter, an embodiment of the present invention will be described with reference to the drawings.

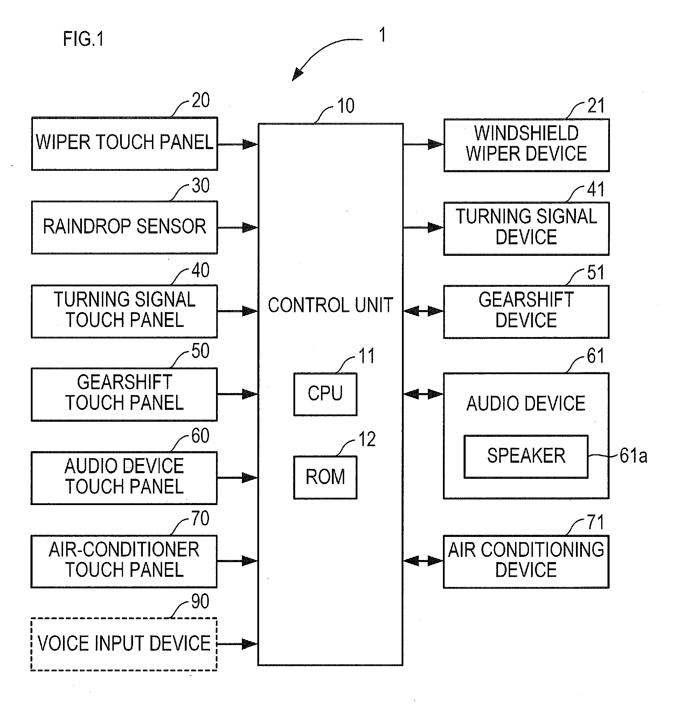

As shown in FIG. 1, a vehicle-mounted apparatus control device 1 includes a control unit 10. The control unit 10 is configured as a so-called computer system, and has a CPU 11, a ROM 12, and the like. Programs for various processes stored in the ROM 12, which will be described later, are executed by the CPU 11.

To the control unit 10, a wiper touch panel 20, a raindrop sensor 30, a turning signal touch panel 40, a gearshift touch panel 50, an audio device touch panel 60, an air-conditioner touch panel 70, a wiper device 21, a turning signal device 41, a gearshift device 51, an audio device 61, and an air conditioning device 71 are electrically connected.

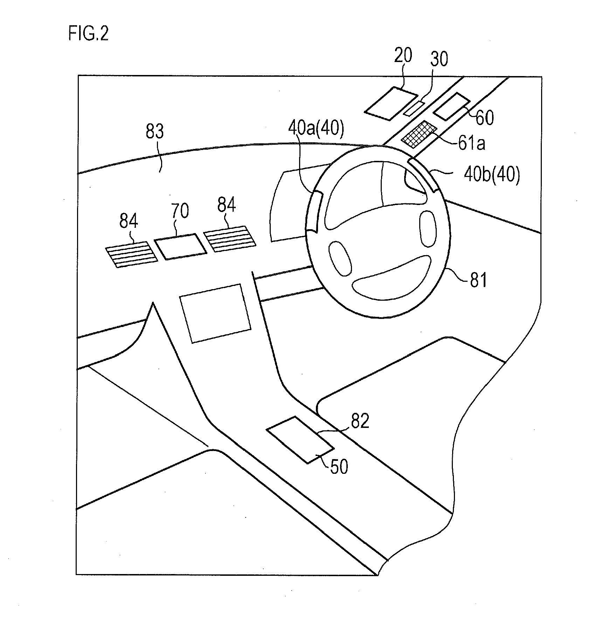

As shown in FIG. 2, the touch panel 20 is installed in the right edge of the inner surface of a vehicle windshield. The panel thereof may be electrostatic or pressure sensitive. By the control unit 10, a touch operation through the touch panel 20 is fetched as event information. Note that the touch operation includes: "tapping," which represents a touch on a panel in a tapping manner; "double tapping," which represents two consecutive tapping operations; "swiping," which represents a touch on a panel by rubbing; "flicking," which represents a touch on a panel by flipping in a predetermined direction; and the like. Note that the same panel structure and the same touch operations will be employed in the following description. To inhibit false detection, a touch operation by two fingers, three fingers, or four fingers may be adopted.

As shown in FIG. 2, the raindrop sensor 30 is provided adjacent to the touch panel 20 and detects raindrops on a portion of an outer surface corresponding to an area of the touch panel 20. It is conceivable that the raindrops are detected by, for example, irradiating the portion with light and obtaining the reflected light. Note that "raindrops" include not only water droplets caused by rain but also water droplets adhering thereto by, for example, a car wash.

As shown in FIG. 2, the touch panels 40 are provided on both sides of a steering wheel 81, respectively. In this embodiment, two panels, a left side panel 40a and a right side panel 40b, are provided to correspond to so-called "ten-past-ten" positions ("10 and 2 o'clock" positions) the driver normally grasps. The left side panel 40a and the right side panel 40b may be disposed at other positions in the steering wheel 81.

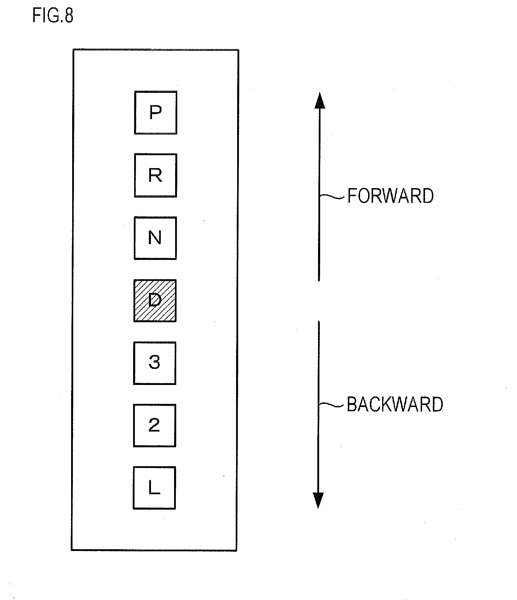

As shown in FIG. 2, the touch panel 50 is disposed on a display surface of a shift position indicator 82 with the panel integrated with the indicator. As shown in FIG. 8, in the shift position indicator 82, gearshift positions are indicated in a line in a vehicle longitudinal direction, and the current shift position is shown by a certain sign, such as lighting. The example of FIG. 8 illustrates the situation in which a drive position "D" is selected.

The touch panel 60 is provided in an inner surface of an A-pillar. Specifically, as shown in FIG. 2, the A-pillar is provided with a speaker 61a, and the touch panel 60 is provided at a position thereof nearer to a roof than the speaker 61a such that the panel corresponds to the speaker 61a.

The touch panel 70 is provided in a dashboard 83. Specifically, as shown in FIG. 2, the dashboard 83 is provided with two air outlets 84, and the touch panel 70 is provided to be interposed between the air outlets 84.

The wiper device 21 has a structure for operating a wiper. The wiper is operated in any of the following ways: in an intermittent operation in which the wiper wipes the windshield intermittently; in a low operation in which the wiper wipes at a predetermined speed; and in a high operation in which the wiper wipes at a higher speed than that of the low operation.

The turning signal device 41 is a device for flashing a turning signal in order to indicate a turning direction.

The gearshift device 51 has a structure for changing shift positions. A selected shift position is indicated on the shift position indicator 82 described above (see FIG. 8).

The audio device 61 has a structure for providing AM and FM radio broadcasting, television broadcasting, and music through CD/DVD/MP3 and the like.

The air conditioning device 71 has a structure for air-conditioning a vehicle interior, and air is sent from the air outlet 84 described above. The air conditioning device 71 is automatic, and can automatically perform air volume control to reach a set ambient temperature.

The devices 21, 41, 51, 61, and 71 are each controlled by signals outputted from the control unit 10.

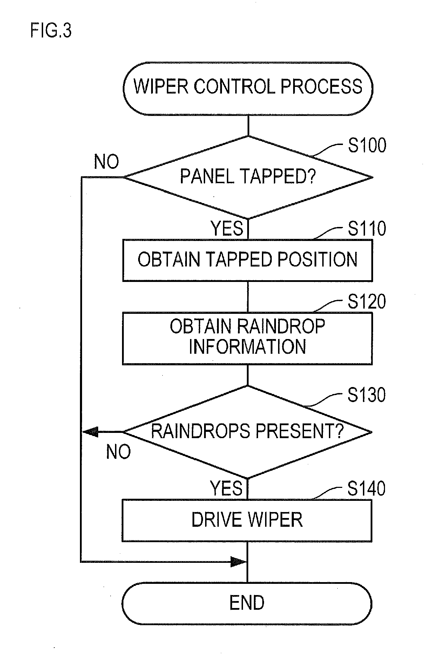

Next, a wiper control process will be described with reference to the flow chart of FIG. 3. This wiper control process is repeatedly executed by the control unit 10 (more specifically by the CPU 11).

First, in S100, determination is made whether or not the panel is tapped. This process determines whether or not the touch panel 20 is tapped. If the panel is determined to be tapped in this process (S100: YES), the process proceeds to S110. On the other hand, if the panel is determined not to be tapped (S100: NO), the wiper control process is terminated without executing the subsequent processes.

In S110, a tapped position is obtained. This process obtains the tapped position of the touch panel 20 as a coordinate value.

Then, in S120, information on raindrops is obtained. This process obtains the information on raindrops based on the signals from the raindrop sensor 30.

Next, in S130, determination is made whether or not raindrops are present. This process determines whether or not raindrops are present on a portion of an outer surface of the windshield which corresponds to the touched position of the touch panel 20. If raindrops are determined to be present thereon (S130: YES), the wiper is driven in S140 and then the wiper control process is terminated. On the other hand, if raindrops are determined not to be present thereon (S130: NO), the wiper control process is terminated without executing the process of S140.

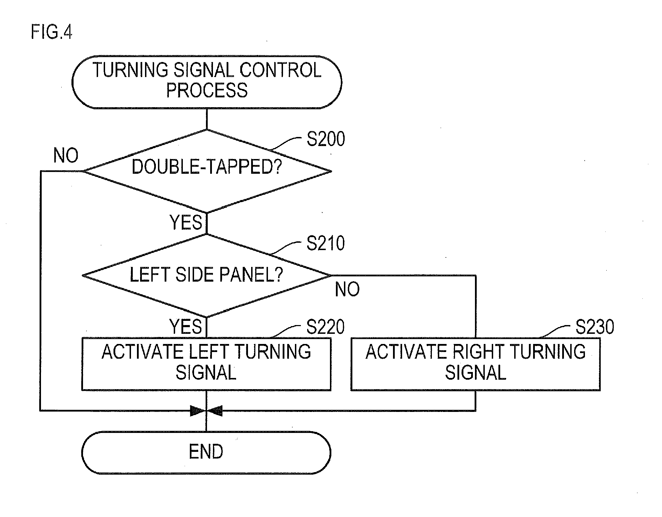

Next, a turning signal control process will be described with reference to the flow chart of FIG. 4. This turning signal control process is repeatedly executed by the control unit 10 (more specifically by the CPU 11).

First, in S200, determination is made whether or not the panel is double-tapped. This process determines whether or not the touch panel 40 is double-tapped. If it is determined to be double-tapped in this process (S200: YES), the process proceeds to S210. On the other hand, if it is determined not to be double-tapped (S200: NO), the turning signal control process is terminated without executing the subsequent processes.

In S210, determination is made whether or not the double-tapped panel is the left side panel. This process determines whether or not the double-tapped panel is the left side panel 40a shown in FIG. 2. If the left side panel is determined to be double-tapped in this process (S210: YES), the left turning signal is activated in S220 and then the turning signal control process is terminated. On the other hand, if the left side panel is determined not to be double-tapped (S210: NO), that is, if the double tapped panel is the right side panel, the right turning signal is activated in S230 and then the turning signal control process is terminated.

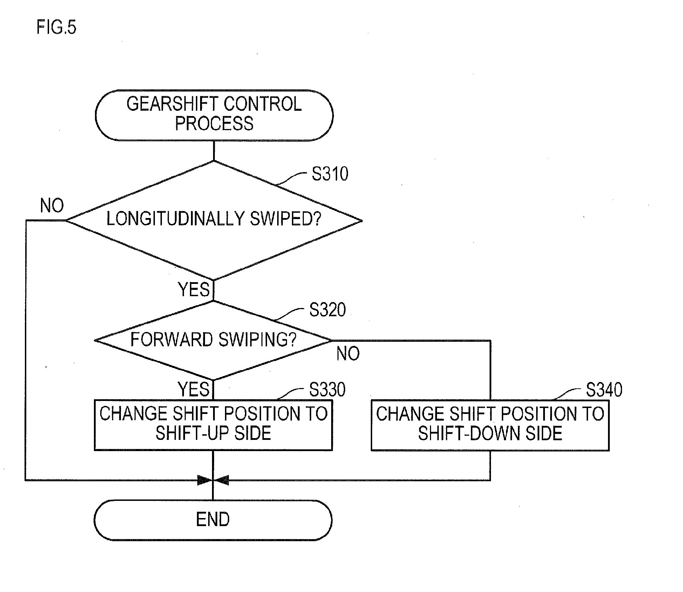

Subsequently, a gearshift control process will be described with reference to the flow chart of FIG. 5. This gearshift control process is repeatedly executed by the control unit 10 (more specifically by the CPU 11).

First, in S310, determination is made whether or not longitudinal swiping is performed. This process determines whether or not the longitudinal swiping is performed on the touch panel 50. If the longitudinal swiping is determined to be performed in this process (S310: YES), the process proceeds to S320. On the other hand, if the longitudinal swiping is determined not to be performed (S310: NO), the gearshift control process is terminated without executing the subsequent processes.

In S320, determination is made whether or not the longitudinal swiping is forward swiping. This process determines whether the longitudinal swiping is the forward swiping shown in FIG. 8. If the longitudinal swiping is determined to be the forward swiping in this process (S320: YES), the shift position changes to the shift-up side in S330, and then the gearshift control process is terminated. On the other hand, if the longitudinal swiping is determined not to be the forward swiping (S320: NO), that is, if the longitudinal swiping is determined to be backward swiping, the shift position changes to the shift-down side in S340, and then the gearshift control process is terminated.

Note that the shift position change to the shift-up side refers to, for example, a shift change of transmission from "D" (drive) to the "N" (neutral) side. Furthermore, the shift position change to the shift-down side refers to, for example, a shift change of transmission from "D" (drive) to the "3" (third) side.

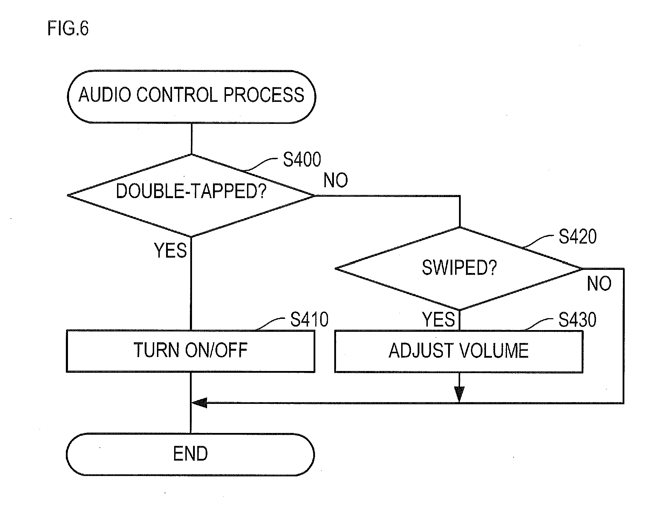

Next, an audio control process will be described with reference to the flow chart of FIG. 6. This audio control process is repeatedly executed by the control unit 10 (more specifically by the CPU 11).

First, in S400, determination is made whether or not the panel is double-tapped. This process determines whether or not the touch panel 60 is double-tapped. If the panel is determined to be double-tapped in this process (S400: YES), in S410, a power source in an ON state is turned off, while the power source in an OFF state is turned on. And then the audio control process is terminated. On the other hand, if the panel is determined not to be double-tapped (S400: NO), the process proceeds to S420.

In S420, determination is made whether or not swiping is performed. This process determines whether or not the touch panel 60 is swiped. If the panel is determined to be swiped in this process (S420: YES), volume control is performed in accordance with the swiping direction in S430, and then the audio control process is terminated. On the other hand, if the panel is determined not to be swiped (S420: NO), the audio control process is terminated without executing the process of S430.

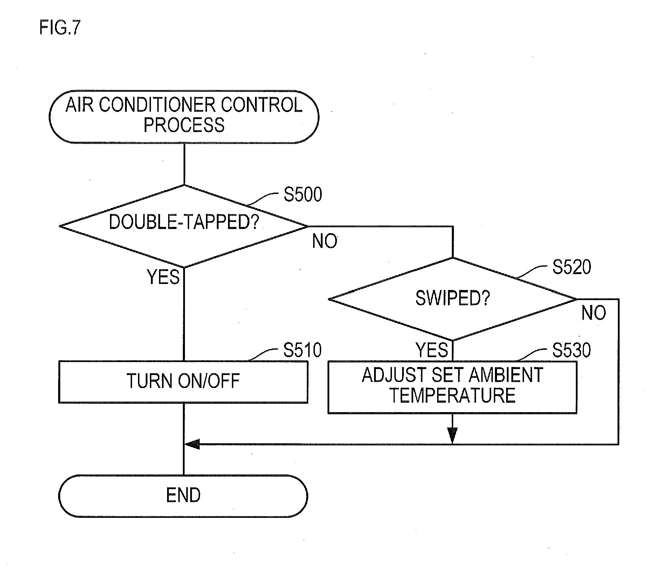

Furthermore, an air conditioner control process will be described with reference to the flow chart of FIG. 7. This audio control process is repeatedly executed by the control unit 10 (more specifically by the CPU 11).

First, in S400, determination is made whether or not the panel is double-tapped. This process determines whether or not the touch panel 70 is double-tapped. If the panel is determined to be double-tapped in this process (S500: YES), in S510, a power source in an ON state is turned off while the power source in an OFF state is turned on. And then the air conditioner control process is terminated. On the other hand, if the panel is determined not to be double-tapped (S500: NO), the process proceeds to S520.

In S520, determination is made whether or not swiping is performed. This process determines whether or not the touch panel 60 is swiped. If the panel is determined to be swiped in this process (S520: YES), the set ambient temperature is adjusted in accordance with the swiping direction in S530. And then the air conditioner control process is terminated. On the other hand, if the panel is determined not to be swiped (S520: NO), the air conditioner control process is terminated without executing the process of S530.

The effect exhibited by the vehicle-mounted apparatus control device 1 of this embodiment will now be described.

In this embodiment, the vehicle-mounted apparatus to be controlled includes the wiper device 21, the turning signal device 41, the gearshift device 51, the audio device 61, and the air conditioning device 71. To these vehicle-mounted apparatus, the touch panel 20, the touch panel 40, the touch panel 50, the touch panel 60, and the touch panel 70 are correspondingly provided (see FIG. 1).

The touch panel 20 is disposed in the windshield to be wiped by the wiper of the wiper device 21. The touch panels 40 are disposed in the steering wheel 81. The touch panel 50 is disposed to be integrated with the shift position indicator 82. The touch panel 60 is disposed to correspond to the speaker 61a. The touch panel 70 is disposed to correspond to the air outlet 84 (see FIG. 2).

That is to say, in this embodiment, the touch panels are provided to correspond to the vehicle-mounted apparatus to be controlled, respectively, and the touch panels are disposed in areas corresponding to the functions of the vehicle-mounted apparatus to be controlled, respectively. This enables more intuitive operations, thereby offering a dramatic improvement in the operability of the vehicle-mounted apparatus.

Furthermore, in this embodiment, when the touch panel 20 is tapped (S100 in FIG. 3: YES), the tapped position and the raindrop information are obtained (S110, S120) and determination is made whether or not raindrops adhere to a portion corresponding to the tapped position (S130). If raindrops adhere thereto (S130: YES), the wiper is driven (S140). That is, even though the touch operation is performed, the vehicle-mounted apparatus is not controlled if there is no need to do so. This enables more intuitive and suitable operations of the vehicle-mounted apparatus.

Moreover, in this embodiment, when the touch panel 40 is double-tapped (S200 in FIG. 4: YES), the left turning signal or the right turning signal is activated (S220, S230). Also, when the touch panel 60 is double-tapped (S400 in FIG. 6: YES), the audio device 61 is turned on/off (S410). Furthermore, when the touch panel 70 is double-tapped (S500 in FIG. 7: YES), the air conditioning device 71 is turned on/off (S510). That is, when a touch operation in a predetermined way is performed, the vehicle-mounted apparatus is controlled. This enables more intuitive and suitable operations of the vehicle-mounted apparatus.

In addition, in this embodiment, when the touch panel 50 is swiped (S310 in FIG. 5), the swiping direction is determined (S320) and the shift position is changed (S330, S340). Moreover, when the touch panel 60 is swiped (S420 in FIG. 6: YES), volume is adjusted on the audio device 61 (S430). Furthermore, when the touch panel 70 is swiped (S520 in FIG. 7: YES), the set ambient temperature of the air conditioning device 71 is adjusted (S530). That is, the direction indicated by the touch operation through the touch panel is determined, and thus the vehicle-mounted apparatus is controlled in accordance with the direction. This enables more intuitive and suitable operations of the vehicle-mounted apparatus.

Note that the vehicle-mounted apparatus control device 1 in this embodiment corresponds to an example of a "vehicle-mounted apparatus control device" according to the present invention. The control unit 10 corresponds to an example of a "control unit" of the present invention. The touch panels 20, 40, 50, 60, and 70 correspond to examples of a "touch detection unit" of the present invention. The raindrop sensor 30 and the CPU 11 executing S120 and S130 of the wiper control process correspond to examples of a "water-droplet presence determination unit" of the present invention. The voice input device 90 corresponds to an example of a "voice input unit" of the present invention.

In the foregoing description, the present invention should not be limited by the above-described embodiment, and can be practiced in various manners without departing from the scope of the invention.
(a) In the above-described embodiment, it is set to detect swiping on the touch panel (S310 and S320 in FIG. 5, S420 in FIG. 6, S520 in FIG. 7). However, since it is sufficient that the direction can be identified, it may be set to detect flicking on the touch panel.
(b) In the above-described embodiment, determination whether or not raindrops are present is made in accordance with the touched position of the touch panel 20 (S110 to S130 in FIG. 3). Alternatively, the touched position is not determined, and determination whether or not raindrops are present may be made in accordance with the area of the touch panel 20. In this case, the process of S110 in FIG. 3 becomes unnecessary.
(c) Furthermore, in the above-described embodiment, adhering raindrops are detected in the portion of the outer surface of the windshield which corresponds to the area of the touch panel 20. Alternatively, the area where the raindrop sensor makes detection may be an area other than the area of the touch panel 20.
(d) In the above-described embodiment, it does not specifically mention how the wiper is driven (S140 in FIG. 3). For example, the wiper is driven in a low operation by single tapping of the touch panel 20, and the wiper is driven in a high operation by double tapping. Like this example, how the wiper is driven may be changed depending on the touch operation.
(e) In the above-described embodiment, as the touch panels 40, the left side panel 40a and the right side panel 40b are disposed in the left and right sides of the steering wheel 81, respectively. Alternatively, for example, the turning signal may be activated in such a manner that a single touch panel is disposed in the whole or a portion of the steering wheel and thus the steering direction is determined by swiping or flicking thereon in the steering direction.

Still alternatively, projections or depressions may be provided in the steering wheel to dispose the touch panels in those portions. With such a structure, the touch panel position can be felt by a tactile sense, thereby reducing the need for watching the panel.

The touch panel may be disposed not only in the rim of the steering wheel but also in the center portion of the steering wheel or the like.
(f) In the above-described embodiment, the touch panel 60 is disposed in the vicinity of the speaker 61a, and alternatively the touch panel 60 may be disposed at another position that corresponds to the function of the audio device 61. For example, the touch panel 60 may be disposed to be integrated with an equalizer indicator or the like.
(g) In the above-described embodiment, the touch panel 70 is disposed in the vicinity of the air outlet 84, and alternatively the air outlet 84 may be disposed at another position that corresponds to the function of the air conditioning device 71. For example, the touch panel 70 may be disposed to be integrated with a temperature indicator for indicating the ambient temperature.
(h) Apart from the above-described embodiment, a touch panel may be provided in a body forming a vehicle shell to control behaviors of the vehicle.
   For example, during back parking, when the vehicle is being backed without noticing a person behind the vehicle, brakes may be applied by touching the vehicle body. In this case, a touch panel is conceivably provided on a trunk of the vehicle, a cover for covering a stop lamp or a back lamp, a bumper, and the like. Also, when the vehicle moves not only backward but also forward, brakes are conceivably applied by touching the body.
(i) In the above-described embodiment, an example of using the touch panel has been described. However, it is sufficient to employ any items that can detect a touch operation, and it is also possible to detect a touch operation by using a camera, a temperature sensor, or the like. In a case where a camera, a temperature sensor, or the like is used, a non-contact pointing operation may be detected in which no finger exactly touches a corresponding portion. For example, the wiper may be activated by pointing to water droplets on the outer side of the windshield without touching the inner surface thereof by a finger. This enables more intuitive operations.
(j) In the above-described embodiment, various vehicle-mounted apparatus are controlled by the operations of the touch panels. Alternatively, as shown by broken lines in FIG. 1, the vehicle-mounted apparatus control device 1 may be constituted so that the vehicle-mounted apparatus control device 1 includes a voice input device 90 and that the various vehicle-mounted apparatus are controlled under a condition of a voice input of a user applied in conjunction with a touch operation of the user through the touch panel. This enhances the effect of inhibiting malfunction. Note that in terms of using voice, through the speaker 61a of the audio device 61, completion of touch operation or the like may be indicated by voice or sound.
(k) In the above-described embodiment, description has been made of application of the present invention to the wiper device 21, the turning signal device 41, the gearshift device 51, the audio device 61, and the air conditioning device 71. In addition, the present invention may be applied to various other devices.
   (k-1) The vehicle-mounted apparatus control device 1 may be constituted so that, for example, on/off of a parking brake is controlled by a touch operation. In this case, it is conceivable that as an example, a touch panel is provided in a vicinity of the shift position indicator 82. This enables reliable operation of the parking brake even by a woman with less power. Note that in order to inhibit malfunction, such a touch operation may be used in combination with information from a vehicle speed sensor.
   (k-2) Furthermore, the vehicle-mounted apparatus control device 1 may be constituted so that, for example, open/close of a window is controlled by a touch operation. In this case, it is conceivable that as an example, a touch panel is provided in a vicinity of the window or in the window itself. This enables more intuitive opening and closing operations of the window.
   (k-3) The vehicle-mounted apparatus control device 1 may be constituted so that, for example, open/close of a cover of a fuel filler opening is controlled by a touch operation. In this case, it is conceivable that a touch panel is provided in a vicinity of a fuel gauge. It is also conceivable that a touch panel is provided in a vicinity of the fuel filler opening. This avoids a situation in which a user forgets where an open/close switch of the cover of the fuel filler opening is located and raises a hood by mistake.
   (k-4) Moreover, the vehicle-mounted apparatus control device 1 may be constituted so that, for example, an accelerator is controlled by a touch operation. In this case, it is conceivable that as an example, a touch panel is provided in a speed meter or the steering wheel 81. In the case where the touch panel is provided in the steering wheel 81, the vehicle-mounted apparatus control device 1 may be constituted so that acceleration actions similar to those of a motor cycle are detected by the touch panel. This inhibits an operating error in depressing not a brake but the accelerator by mistake, and vice versa.
   (k-5) The vehicle-mounted apparatus control device 1 may be constituted so that, for example, a rear wiper is controlled by a touch operation. In this case, it is conceivable that as an example, a touch panel is provided in a rearview mirror. Specifically, the rear wiper may be activated by swiping the rearview mirror. This enables more intuitive operation.
(l) Note that the vehicle-mounted apparatus control device 1 may be constituted so that by using a touch panel of a smartphone or the like, the vehicle-mounted apparatus is controlled from, for example, a backseat. Furthermore, if the touch panel is relatively large, the position of a touch operation may be set for each user. Moreover, the way of the touch operation may be set for each user.

## Claims

1. A vehicle-mounted apparatus control device comprising:
a touch detection unit that is provided corresponding to a vehicle-mounted apparatus to be controlled, and that can detect a touch operation of a user relating to a function of the vehicle-mounted apparatus to be controlled; and
a control unit that controls the vehicle-mounted apparatus on the basis of the touch operation of the user detected by the touch detection unit.

2. The vehicle-mounted apparatus control device according to claim 1, wherein the control unit controls the vehicle-mounted apparatus in a case where, on the basis of the touch operation detected by the touch detection unit, it is determined that the vehicle-mounted apparatus needs to be controlled.

3. The vehicle-mounted apparatus control device according to claim 2, further comprising a water-droplet presence determination unit that determines whether or not water droplets are present on an outer surface of a window,
wherein the vehicle-mounted apparatus includes a wiper device,
wherein the touch detection unit is provided so that a touch operation on an inner surface of the window can be detected, and
wherein the control unit controls the wiper device in a case where the touch operation is detected by the touch detection unit and by the water-droplet presence determination unit, it is determined that water droplets are present on the outer surface of the window.

4. The vehicle-mounted apparatus control device according to any one of claims 1 to 3,
wherein the control unit controls the vehicle-mounted apparatus when a touch operation in a predetermined way is detected by the touch detection unit.

5. The vehicle-mounted apparatus control device according to claim 4,
wherein the vehicle-mounted apparatus includes a turning signal device,
wherein the touch detection unit is provided so that a touch operation on a steering wheel can be detected, and
wherein the control unit controls the turning signal device when a touch operation in a predetermined way is detected by the touch detection unit.

6. The vehicle-mounted apparatus control device according to claim 4 or 5,
wherein the vehicle-mounted apparatus includes an audio device,
wherein the touch detection unit is provided so that a touch operation on an area that corresponds to a speaker constituting the audio device can be detected, and
wherein the control unit controls the audio device when a touch operation in a predetermined way is detected by the touch detection unit.

7. The vehicle-mounted apparatus control device according to any one of claims 4 to 6,
wherein the vehicle-mounted apparatus includes an air conditioning device,
wherein the touch detection unit is provided so that a touch operation on an area corresponding to an air outlet of the air conditioning device can be detected, and
wherein the control unit controls the air conditioning device when a touch operation in a predetermined way is detected by the touch detection unit.

8. The vehicle-mounted apparatus control device according to any one of claims 1 to 7,
wherein the control unit determines a direction that is indicated by the touch operation detected by the touch detection unit, and controls the vehicle-mounted apparatus in accordance with the direction.

9. The vehicle-mounted apparatus control device according to claim 8,
wherein the vehicle-mounted apparatus includes a gearshift device,
wherein the touch detection unit is provided so that a touch operation on an area that corresponds to a shift position indicator indicating a shift position can be detected, and
wherein the control unit changes the shift position in accordance with the direction that is indicated by the touch operation detected by the touch detection unit.

10. The vehicle-mounted apparatus control device according to claim 8 or 9,
wherein the vehicle-mounted apparatus includes an audio device,
wherein the touch detection unit is provided so that a touch operation on an area that corresponds to a speaker constituting the audio device can be detected, and
wherein the control unit controls the audio device in accordance with the direction that is indicated by the touch operation detected by the touch detection unit.

11. The vehicle-mounted apparatus control device according to any one of claims 8 to 10,
wherein the vehicle-mounted apparatus includes an air conditioning device,
wherein the touch detection unit is provided so that a touch operation on an area that corresponds to an air outlet of the air conditioning device can be detected, and
wherein the control unit controls the air conditioning device in accordance with the direction that is indicated by the touch operation detected by the touch detection unit.

12. The vehicle-mounted apparatus control device according to any one of claims 1 to 11, further comprising a voice input unit that inputs voice of the user,
wherein the control unit controls the vehicle-mounted apparatus when a voice input through the voice input unit is applied in conjunction with the touch operation detected by the touch detection unit.

13. A program that performs the functions of the control unit provided in the vehicle-mounted apparatus control device according to any one of claims 1 to 12.
